# EUROPÄISCHE PATENTSCHRIFT

(11) **EP 1 199 239 B1**
(45) Veröffentlichungstag und Bekanntmachung des Hinweises auf die Patenterteilung: **26.04.2006**
(21) Anmeldenummer: 01124762.4
(22) Anmeldetag: 17.10.2001
(51) Int. Cl.: B61D 25/00, B60J 1/10

(54) **Fenstereinbausystem für Fahrzeuge**
System for the installation of windows in vehicles
Système pour l'installation de fenêtres dans des véhicules

(30) Priorität: 19.10.2000 DE 10051919
(43) Veröffentlichungstag der Anmeldung: 24.04.2002
(73) Patentinhaber: ALSTOM LHB GmbH, 38239 Salzgitter (DE)
(72) Erfinder: Thofern, Peter, 38228 Salzgitter (DE); Don, Rainer, 34266 Niestetal (DE)

(56) Entgegenhaltungen:
- EP-A- 0 709 269
- EP-A- 0 865 953
- EP-A- 0 970 865
- DE-A- 19 708 840
- DE-A- 19 858 491

## Beschreibung

Die Erfindung betrifft ein System zum Einbau von Fenstern für Fahrzeuge, insbesondere für Schienenfahrzeuge, bei denen die Fensterscheibe von einem Rahmen umgeben ist und diese Baueinheit gemeinsam in die Fensteröffnung der Fahrzeugwand eingesetzt wird.

Gemäß DE 195 41 270 A1 ist ein Fenster für Schienenfahrzeuge bekannt, bei dem ein Rahmenprofil durch eine Klebeverbindung in der Wandöffnung gehalten wird. Das Rahmenprofil hat unterschiedliche Funktionsbereiche, die der Abstützung des Rahmenprofils an der Wand-öffnung und an dem Tragprofil dienen, das die Wandöffnung von innen umgibt. Weitere Funktionsbereiche des Rahmenprofils dienen darüber hinaus der Abstützung der Fensterscheibe und der Aufnahme der unterschiedlichsten Dichtungsprofile sowie der inneren Wandverkleidungselemente.

Ein weiteres gattungsgemäßes Fenster ist aus der DE 36 11 487 A1 bekannt. Bei dieser Ausführung wird gleichfalls ein Rahmenprofil durch Klebung in der durch ein innen umlaufendes Tragprofil verstärkten Wandöffnung gehalten. Das Rahmenprofil trägt mit seinem der äußeren Wand zugewandten Schenkel die Fensterscheibe, die sich einerseits an der äußeren Wand abstützt und andererseits nach innen durch ein Elastomerprofil gehalten wird.

Andererseits ist durch die EP-A2-0970865 (ALSTOM) bekannt, einen Fensterrahmen aus einem die Fensteröffnung umgebenden Rahmenprofil mit T- förmigem Querschnitt und einem mit dem Rahmenprofil verbundenen Stützprofil mit U-förmigen Querschnitt zu bilden, entsprechend dem Oberbegriff von Anspruch 1.

Der Nachteil sämtlicher bekannter Fenster, die für den Einbau in Fahrzeugen, insbesondere in Schienenfahrzeugen bekannt sind und von denen die beiden vorgenannten Ausführungen den gattungsgemäß naheliegenden Stand der Technik darstellen, besteht darin, daß alle verwendeten Bauelemente auf den Einsatz einer vorgegebenen Fensterscheibendicke festgelegt sind. Das bedeutet, daß eine Anpassung des Fenstereinbausystems an unterschiedliche Fensterscheibendicken die Bereitstellung bestimmter einzelner Bauelemente in unterschiedlichen Baugrößen erfordert und damit ein erhöhter Kostenaufwand verbunden ist.

Die Aufgabe der Erfindung besteht darin, ein System zum Einbau von Fenstern unterschiedlicher Dicken in Fahrzeugen bereitzustellen.

Die Erfindung wird durch die Merkmale des Anspruches 1 gelöst. Danach ist der für die Aufnahme der Fensterscheibe ausgebildete Fensterrahmen durch eine geteilte Ausführung gekennzeichnet. Der Fensterrahmen besteht demzufolge aus einem die Fensteröffnung umgebenden Rahmenprofil mit T-förmigem Querschnitt und einem mit dem Rahmenprofil durch Kleben verbundenen Stützprofil mit U-förmigem Querschnitt. Das Stützprofil ist vor dem Kleben bezogen auf das Rahmenprofil senkrecht zur Ebene des Fensters je nach der Dicke der einzubauenden Fensterscheibe positionierbar.

Der Flansch des Rahmenprofils erstreckt sich in der Ebene des Fensters, wobei ein sich nach außen erstreckender Flanschbereich zur Abstützung des Fensters an der Seitenwand des Fahrzeuges und ein sich nach innen erstreckender Flanschbereich zur Abstützung der Fensterscheibe im Fensterrahmen ausgebildet ist.

Der Steg des Rahmenprofils erstreckt sich senkrecht zur Ebene des Fensters nach innen, wobei die bezogen auf das Fenster nach außen weisende Seite des Steges als Kontaktfläche mit der Leibung der Fensteröffnung und die nach innen weisende Seite des Steges als Anlage für das Stützprofil dient, wobei das Stützprofil mit seiner Rückseite auf dem Steg anliegt und der nach innen gerichtete, zum Flansch benachbarte erste Schenkel sich zum stirnseitigen Rand der Fensterscheibe in gegenüberliegender Position befindet, während der andere zweite Schenkel in Richtung des ersten Schenkels geneigt ausgeführt ist.

Die Erfindung wird anhand eines Ausführungsbeispiels näher erläutert. Die dazugehörigen Zeichnungen zeigtin
- Fig. 1: einen Querschnitt durch den Fensterrahmen beim Einsatz einer Fensterscheibe mit einer Dicke von 5 mm und in
- Fig. 2: einen Querschnitt durch den Fensterrahmen beim Einsatz einer Fensterscheibe mit einer Dicke von 19 mm.

In die in der Wagenseitenwand vorgesehene Fensteröffnung 2 wird ein vorzugsweise vorgefertigtes Fenster eingebaut. Die Seitenwand weist zu ihrer Stabilität im Bereich der Fensteröffnung 2 und zur Abstützung des Fensters eine rechtwinklig nach innen gerichtete, als Abkantung ausgebildete Leibung 10 auf, die in einer weiteren rechtwinkligen Abkantung endet, die in der Ebene der Seitenwand zurückführt.

Das Fenster wird aus den nachstehend aufgeführten Elementen vormontiert und als kompakte Baueinheit in die Fensteröffnung 2 eingesetzt. Das Fenster besteht aus einem Fensterrahmen 1, der aus einem Rahmenprofil 3 und einem mit dem Rahmenprofil 3 verbundenen Stützprofil 4 besteht. Das Rahmenprofil 3 entspricht in seinem Querschnitt einem T-Profil. Ein Steg 9 des Rahmenprofils 3 ist dabei senkrecht zur Ebene des Fensters ausgerichtet und dient auf der Außenseite beim späteren Einbau des Fensters als Kontaktfläche zur Leibung 10.

Ein sich parallel zur Seitenwand erstreckende Flansch 6 des Rahmenprofils 3 ist funktionsbedingt in zwei Bereiche unterteilt. Ein bezogen auf die Ebene des Fensterrahmens 1 nach außen gerichtete Flanschbereich 7 dient beim späteren Einbau als Kontaktfläche des Fensterrahmens 1 zur Seitenwand. Ein bezogen auf die Ebene des Fensterrahmens 1 nach innen gerichtete Flanschbereich 8 dient als seitlicher Anschlag für eine von innen eingesetzte Fensterscheibe 5.

Auf der Innenseite des Steges 9 wird das Stützprofil 4 mit nach Innen offenem U angeordnet. Dabei weist das Stützprofil 4 funktionsbedingt drei Bereiche auf. Der erste Bereich, die Rückseite des Stützprofils 4 dient als Kontaktfläche zur Innenseite des Steges 9, wobei die Position des Stützprofils 4 auf dem Steg 9 durch die Dicke der Fensterscheibe 5 festgelegt wird. Je nach der Dicke der Fensterscheibe 5 wird das Stützprofil 4 auf der Innenseite des Steges 9 quer zur Ebene des Fensters nach innen oder nach außen verschoben und in dieser Position fixiert, wobei die Verbindung zwischen beiden Elementen vorzugsweise durch Verkleben erfolgt.

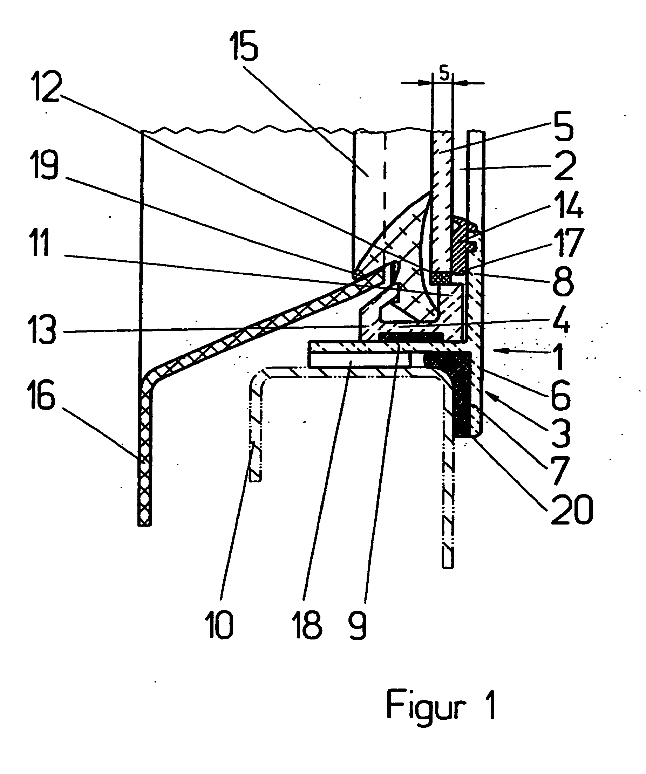

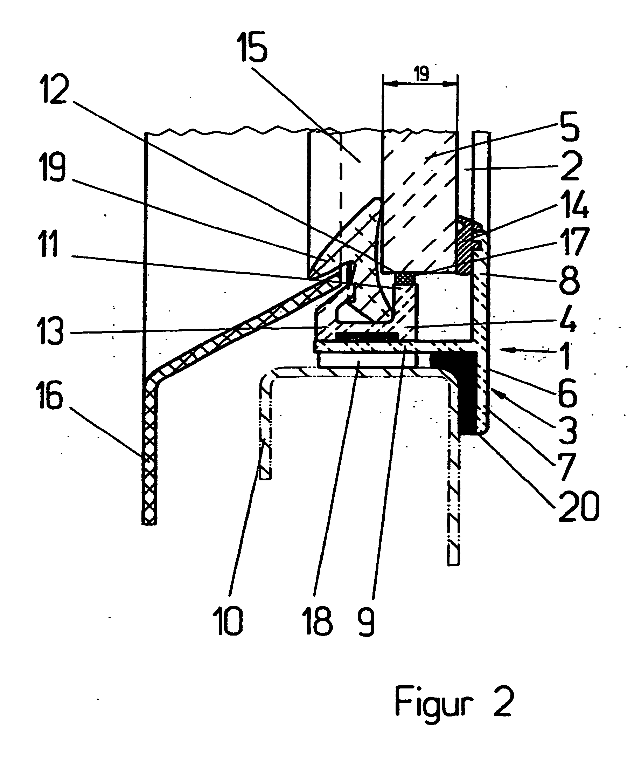

In Fig. 1 und Fig. 2 sind die Einbauzustände der jeweils minimalen und der maximalen Fensterscheibendicke dargestellt. Dabei ist zu gewährleisten, daß der stirnseitige Rand 12 der Fensterscheibe 5 einem als Stützlager wirkenden ersten, dem Flansch 6 benachbarten Schenkel 11 des Stützprofils 4 gegenüberliegt. Zwischen dem Rand 12 der Fensterscheibe 5 und dem Schenkel 11 wird ein ausreichend nachgiebiges Auflager 17 angeordnet, das zur Erhöhung der Bruchsicherheit der Fensterscheibe 5 bei Wagenkastenverformungen beiträgt.

Der dritte funktionsbedingte Bereich, ein zweiter Schenkel 13 des Stützprofils 4 dient der Aufnahme eines handelsüblichen Dichtungsgummis 15. Dazu ist der zweite Schenkel 13 zum ersten Schenkel 11 hin geneigt, um es dem Dichtungsgummi 15 zu ermöglichen, sich beim Einsetzen mit der einen Kante im Stützprofil 4 zu verklemmen und mit der anderen Kante die Fensterscheibe 5 gegen den Flanschbereich 8 zu drücken, wobei zwischen der Fensterscheibe 5 und dem Flanschbereich 8 ein zweites Dichtgummi 14 angeordnet ist.

Das Einsetzen des vormontierten Fensters in die Fensteröffnung 2 erfolgt von außen in der Weise, daß der Steg 9 des Rahmenprofils 3 mit seiner Außenseite auf der Leibung 10 aufliegt. Zur besseren Ausrichtung des Fensters in der Fensteröffnung 2 werden zwischen der Außenseite des Steges 9 und der Leibung 10 Paßstücke 18 eingesetzt. In dieser Ausrichtung wird das Fenster gegen die Seitenwand geschoben, bis der Flanschbereich 8 an der Seitenwand zur Anlage kommt. Auf der Innenseite des Fensters wird zwischen dem Fenster und dem Schlüsselrahmen 16 ein gleichmäßiger Übergang gewährleistet, indem im Dichtungsgummi 15 ein Vorsprung 19 ausgebildet ist, der die freie, am zweiten Schenkel 13 des Stützprofils 4 anliegende Kante des Schlüsselrahmens 16 abdeckt.

Die Verbindung zwischen der Fensteröffnung 2 einerseits und dem Fensterrahmen 1 andererseits wird durch einen dauerelastischen Kleber 20 hergestellt.

Die erfindungsgemäße Ausführung des Fensterrahmens hat den Vorteil, Fensterscheiben mit unterschiedlichen Dicken zu verarbeiten, ohne auf unterschiedliche Rahmenprofile zurückgreifen zu müssen. Das bedeutet, daß keine Veränderungen an den zu verwendenden Strangpressprofilen und dem Gummi bei veränderten Scheibendicken notwendig sind.

Das System ist für runde und winklige Fensterecken und für die Montage der Scheiben in Gummi oder mit PUR-Kleber geeignet.

Dabei ist das Fenstereinbausystem für alle praktisch eingesetzten Scheibendikken, insbesondere mit Dicken zwischen etwa 5 und 19 mm und alle Scheibenqualitäten, wie ESG, VSG und Doppel- (Isolier-) Verglasung geeignet.

### Bezugszeichenliste

- 1: Fensterrahmen
- 2: Fensteröffnung
- 3: Rahmenprofil
- 4: Stützprofil
- 5: Fensterscheibe
- 6: Flansch
- 7: Äußerer Flanschbereich
- 8: Innerer Flanschbereich
- 9: Steg
- 10: Leibung
- 11: Erster Schenkel
- 12: Stirnseitiger Rand
- 13: Zweiter Schenkel
- 14: Dichtungsgummi
- 15: Dichtungsgummi
- 16: Schlüsselrahmen
- 17: Auflager
- 18: Paßstück
- 19: Vorsprung
- 20: Kleber

## Patentansprüche

1. Fenstereinbausystem für Fahrzeuge, insbesondere Schienenfahrzeuge, bestehend aus einem in der Fensteröffnung gehaltenen, für die Aufnahme der Fensterscheibe ausgebildeten Fensterrahmen, wobei der Fensterrahmen (1) aus einem die Fensteröffnung (2) umgebenden Rahmenprofil (3) mit T-förmigem Querschnitt und einem mit dem Rahmenprofil (3) verbundenen Stützprofil (4) mit U-förmigem Querschnitt gebildet wird, wobei sich ein Flansch (6) des Rahmenprofils (3) in der Ebene des Fensters erstreckt, der einen sich nach außen erstreckenden Flanschbereich (7) zur Abstützung des Fensters an der Seitenwand des Fahrzeuges und einen sich nach innen erstreckenden Flanschbereich (8) zur Abstützung der Fensterscheibe (5) im Fensterrahmen (1) aufweist, **dadurch gekennzeichnet, daß** das Stützprofil(4) mit dem Rahmenprofil (3) durch Kleben verbunden ist, wobei das Stützprofil (4) vor dem Kleben bezogen auf das Rahmenprofil (3) senkrecht zur Ebene des Fensters je nach der Dicke der einzubauenden Fensterscheibe (5) gegen den Flansch (6) des Rahmenprofils (3) positionierbar ist, und daß sich ein Steg (9) des Rahmenprofils (3) senkrecht zur Ebene des Fensters nach innen erstreckt, wobei die bezogen auf das Fenster nach außen weisende Seite des Steges (9) als Kontaktfläche mit der Leibung (10) der Fensteröffnung (2) und die nach innen weisende Seite des Steges (9) als Anlage für das Stützprofil (4) dient, wobei das Stützprofil (4) mit seiner Rückseite auf dem Steg (9) anliegt und ein nach innen gerichtete, zum Flanschbereich (7) benachbarte erste Schenkel (11) des Stützprofils (4) sich zum stirnseitigen Rand (12) der Fensterscheibe (5) in gegenüberliegender Position befindet, während der andere zweite Schenkel (13) in Richtung des ersten Schenkels (11) geneigt ausgeführt ist.

2. Fenstereinbausystem nach Anspruch 1, **dadurch gekennzeichnet, daß** die Länge des Steges (9) so bemessen ist, daß eine vollflächige Auflage des Stützprofils (4) in den durch die Dicke der einzubauenden Fensterscheiben (5) vorgegebenen Endlagen des Stützprofils (4) und dazwischen gewährleistet ist.

3. Fenstereinbausystem nach Anspruch 1 oder 2, **dadurch gekennzeichnet, daß** die äußere Seite des Randbereiches der Fensterscheibe (5) am Flanschbereich (7) anliegt, wobei zwischen dem Flanschbereich (7) und der Fensterscheibe (5) ein Dichtungsgummi (14) angeordnet ist und an der inneren Seite des Randbereiches der Fensterscheibe (5) ein im Stützprofil (4) verklemmter, die Fensterscheibe (5) gegen den Flanschbereich (7) drückender Dichtungsgummi (15) angeordnet ist.

4. Fenstereinbausystem nach Anspruch 3, **dadurch gekennzeichnet, daß** das Dichtungsgummi (14) einen Vorsprung zur Abdeckung der freien, am geneigten zweiten Schenkel (13) des Stützprofils (4) anliegenden Kante des Schlüsselrahmens (16) aufweist.

5. Fenstereinbausystem nach einem der Ansprüche 1 bis 4, **dadurch gekennzeichnet, daß** zwischen dem Rand (12) der Fensterscheibe (8) und dem ersten Schenkel (11) ein ausreichend nachgiebiges Auflager (17) angeordnet ist.

## Claims

1. Window installation system for vehicles, in particular railway vehicles, consisting of a window frame held in the window opening and configured to receive the window pane, the window frame (1) being formed from a frame profile (3) surrounding the window opening (2), with a T-shaped cross-section and a support profile (4) connected to the frame profile (3), with a U-shaped cross-section, a flange (6) of the frame profile (3) extending in the plane of the window and having an outwardly extending flange region (7) to support the window on the side wall of the vehicle and an inwardly extending flange region (8) to support the window pane (5) in the window frame (1), **characterised in that** the support profile (4) is connected to the frame profile (3) by adhesion, wherein it is possible to position the support profile (4) against the flange (6) of the frame profile (3) prior to adhesion, with respect to the frame profile (3), perpendicular to the plane of the window depending on the thickness of the window pane (5) to be installed, and **in that** a web (9) of the frame profile (3) extends inwardly perpendicularly to the plane of the window, the side of the web (9) pointing outwardly with respect to the window being used as a contact face with the reveal (10) of the window opening (2) and the inwardly pointing side of the web (9) being used as an abutment for the support profile (4), the support profile (4) resting with its rear on the web (9) and an inwardly directed first leg (11), adjacent to the flange region (7), of the support profile (4) being located in an opposing position with respect to the end edge (12) of the window pane (5), while the other second leg (13) is inclined in the direction of the first leg (11).

2. Window installation system according to claim 1, **characterised in that** the length of the web (9) is dimensioned such that complete abutment of the support profile (4) in the end positions of the support profile (4) predetermined by the thickness of the window panes (5) to be installed, and therebetween, is ensured.

3. Window installation system according to claim 1 or 2, **characterised in that** the outer side of the edge region of the window pane (5) rests on the flange region (7), a rubber seal (14) being arranged between the flange region (7) and the window pane (5) and a rubber seal (15) jammed in the support profile (4) and pressing the window pane (5) against the flange region (7) being arranged on the inner side of the edge region of the window pane (5).

4. Window installation system according to claim 3, **characterised in that** the rubber seal (14) has a projection to cover the free edge of the key frame (16) resting on the inclined second leg (13) of the support profile (4).

5. Window installation system according to any one of claims 1 to 4, **characterised in that** an adequately flexible bearing (17) is arranged between the edge (12) of the window pane (8) and the first leg (11).

## Revendications

1. Système de montage de fenêtres pour véhicules, en particulier pour véhicules ferroviaires, comprenant un châssis de fenêtre fixé dans la baie et conçu pour recevoir la vitre, le châssis de fenêtre (1) se composant d'un profilé de châssis (3) à section transversale en T qui entoure la baie (2), et d'un profilé de support (4) à section transversale en U qui est relié au profilé de châssis (3), une aile (6) du profilé de châssis (3) s'étendant dans le plan de la fenêtre et comportant une zone d'aile (7) qui s'étend elle-même vers l'extérieur pour supporter la fenêtre au niveau de la paroi latérale du véhicule, et une zone d'aile (8) qui s'étend vers l'intérieur pour supporter la vitre (5) dans le châssis (1), **caractérisé en ce que** le profilé de support (4) est relié au profilé de châssis (3) par collage, en étant positionnable avant le collage par rapport audit profilé de châssis (3) perpendiculairement au plan de la fenêtre, en fonction de l'épaisseur de la vitre (5) à monter, contre l'aile (6) du profilé de châssis (3), et **en ce qu'**une branche (9) du profilé de châssis (3) s'étend perpendiculairement au plan de la fenêtre, vers l'intérieur, étant précisé que le côté de la branche (9) dirigé vers l'extérieur par rapport à la fenêtre sert de surface de contact avec l'appui (10) de la baie (2) tandis que son côté dirigé vers l'intérieur sert d'appui pour le profilé de support (4), et que ledit profilé de support (4) est appliqué avec son côté arrière sur l,a branche (9) et que sa première branche (11), dirigée vers l'intérieur et voisine de la zone d'aile (7), se trouve en face du bord frontal (12) de la vitre (5), tandis que la seconde branche (13) est inclinée vers la première (11).

2. Système de montage de fenêtre selon la revendication 1, **caractérisé en ce que** la longueur de la branche (9) est calculée pour garantir un appui du profilé de support (4) sur toute sa surface dans les positions d'extrémité dudit profilé de support (4) prédéfinies par l'épaisseur des vitres à monter (5) et entre ces positions.

3. Système de montage de fenêtre selon la revendication 1 ou 2, **caractérisé en ce que** le côté extérieur de la zone du bord de la vitre (5) est appliqué contre la zone d'aile (8), étant précisé qu'il est prévu entre la zone d'aile (8) et la vitre (5) un joint en caoutchouc (14), et sur le côté intérieur de la zone du bord de la vitre (5) un joint en caoutchouc (15) qui est serré dans le profilé de support (4) et qui presse la vitre (5) contre la zone d'aile (7).

4. Système de montage de fenêtre selon la revendication 3, **caractérisé en ce que** le joint en caoutchouc (15) présente une saillie pour couvrir le bord libre du châssis (16) qui est appliqué contre la seconde branche inclinée (13) du profilé de support (4).

5. Système de montage de fenêtre selon l'une des revendications 1 à 4, **caractérisé en ce qu'**il est prévu entre le bord (12) de la vitre (5) et la première branche (11) un coussinet (17) suffisamment flexible.
